# EUROPEAN PATENT APPLICATION

(11) **EP 4 786 927 A1**
(43) Date of publication of application: **05.08.2026**
(21) Application number: 24871390.1
(22) Date of filing: 11.06.2024
(51) Int. Cl.: G01D 5/20, H02P 6/16

(54) **ANGLE SENSOR AND ROTARY DEVICE**

(30) Priority: 29.09.2023 JP 2023170715
(71) Applicant: Minebea Mitsumi Inc., Kitasaku-gun, Nagano 3890293 (JP)
(72) Inventor: FUJITA Kazuhiko, Kitasaku-gun, Nagano 389-0293 (JP); OCHIAI Takaaki, Kitasaku-gun, Nagano 389-0293 (JP)
(74) Representative: Winter, Brandl - Partnerschaft mbB
(86) International application number: PCT/JP2024/021175
(87) International publication number: WO 2025/069585

(57) **Abstract**

An angle sensor (1) includes a rotor (2) having a plurality of protrusions (11) extending in a radial direction, a base (3), and a conducting wire (4) with a covering. The conducting wire (4) provided at a structural surface (3a) of the base (3) forms a planar shape having a plurality of undulations in the radial direction. The protrusions (11) are opposed to the conducting wire (4) in a direction of an axis (x).

## Description

### Technical Field

The present invention relates to an angle sensor and a rotary device, and particularly, to an inductive angle sensor and a rotary device including an inductive angle sensor.

### Background Art

Various known sensors have been used to detect a rotation angle of a motor or the like. Examples of an angle sensor detecting such a rotation angle include an inductive sensor (see, for example, Patent Document 1).

### Citation List

### Patent Literature

Patent Document 1: JP 2019-200106 A

### Summary of Invention

### Technical Problem

Conventional inductive sensors have room for improvement in detection accuracy.

Therefore, an object of the present invention is to provide an angle sensor and a rotary device capable of improving detection accuracy.

### Solution to Problem

An angle sensor according to one aspect of the present invention includes a rotor having a plurality of protrusions extending in a radial direction, a base, and a conducting wire with a covering. The conducting wire provided at a surface of the base forms a planar shape having a plurality of undulations in the radial direction. The protrusions are opposed to the conducting wire in a rotational axis direction.

### Brief Description of Drawings

FIG. 1 is a perspective view schematically illustrating a configuration of an angle sensor according to one embodiment of the present invention.
FIG. 2 is a side view schematically illustrating the configuration of the angle sensor.
FIG. 3 is a front view schematically illustrating a configuration of a rotor of the angle sensor.
FIG. 4 is a front view schematically illustrating a configuration of a base of the angle sensor.
FIG. 5 is a front view of the rotor illustrating one modified example of a metal body.
FIG. 6 is a front view of the rotor illustrating one modified example of the metal body.
FIG. 7 is a front view of the rotor illustrating one modified example of the metal body.
FIG. 8 is a perspective view of the rotor illustrating one modified example of the metal body.
FIG. 9 is a perspective view of the rotor illustrating one modified example of the metal body.
FIG. 10 is a cross-sectional view of a protrusion illustrating one modified example of the protrusion.
FIG. 11 is a cross-sectional view of the protrusion illustrating one modified example of the protrusion.
FIG. 12 is a cross-sectional view of the protrusion illustrating one modified example of the metal body.
FIG. 13 is a perspective view of the rotor illustrating one modified example of the rotor.
FIG. 14 is a front view of the base illustrating one modified example of the base.
FIG. 15 is an exploded perspective view of one specific example of a rotary device as an application target of the angle sensor.
FIG. 16 is a perspective view illustrating a distal end part of a rotating shaft and a vicinity of the distal end part in the rotary device illustrated in FIG. 15.
FIG. 17 is a perspective view of one specific example of the rotor of the angle sensor.

### Description of Embodiments

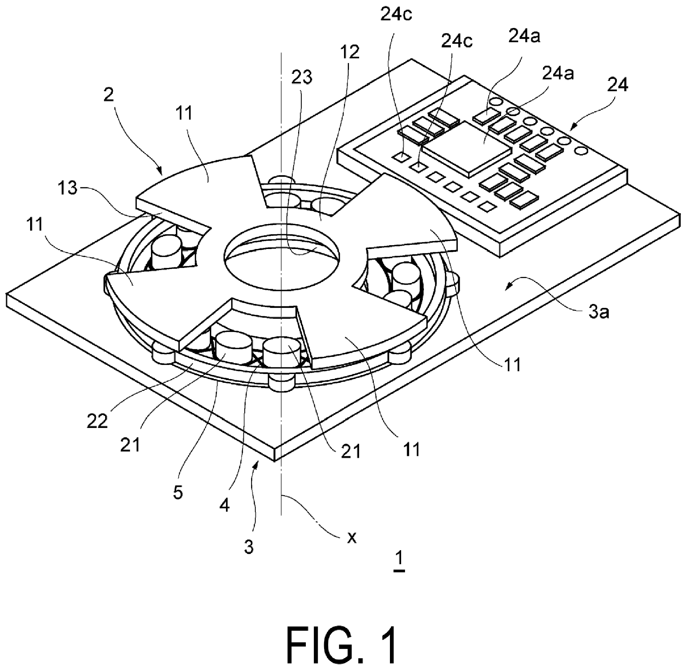

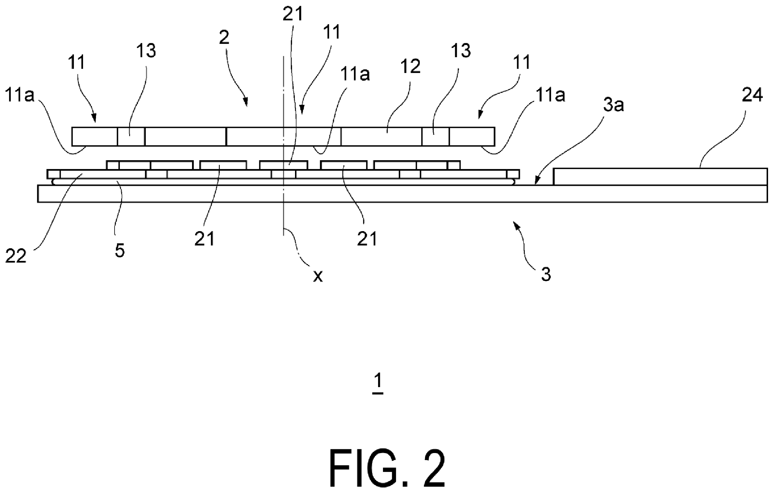

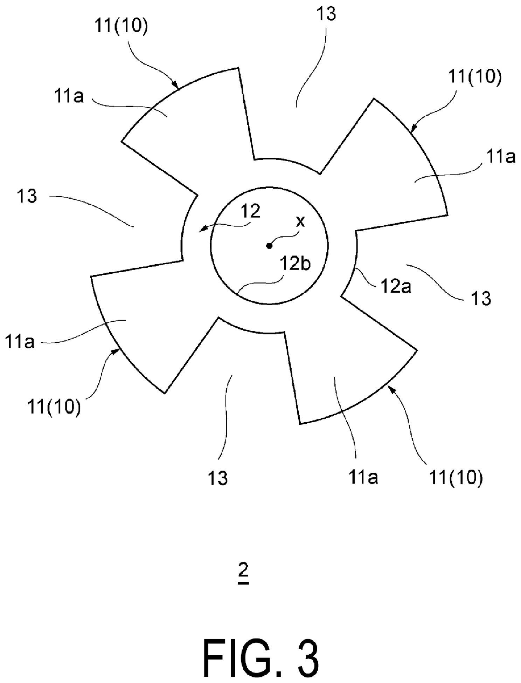

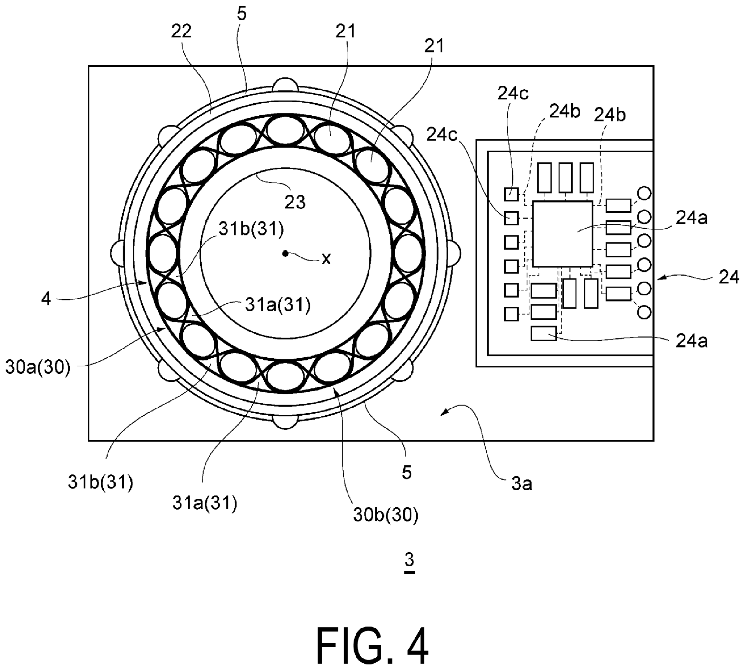

One embodiment of the present invention will be described below with reference to the accompanying drawings. In the drawings, the plurality of members are not all provided with reference signs, and reference signs may be omitted for some of a plurality of components. FIG. 1 is a perspective view schematically illustrating a configuration of an angle sensor 1 according to one embodiment of the present invention, and FIG. 2 is a side view schematically illustrating the configuration of the angle sensor 1. FIG. 3 is a front view schematically illustrating a configuration of a rotor 2 of the angle sensor 1, and FIG. 4 is a front view schematically illustrating a configuration of a base 3 of the angle sensor 1. As illustrated in FIGS. 1 to 4, the angle sensor 1 includes a rotor 2 having a plurality of protrusions 11 extending in a radial direction, a base 3, and a conducting wire 4 with a covering. The conducting wire 4 provided on a surface (hereinafter referred to as a structural surface) 3a of the base 3 forms a planar shape having a plurality of undulations in the radial direction, and the protrusions 11 are opposed to the conducting wire 4 in a direction of a rotation axis (hereinafter referred to as axis) x. A configuration of the angle sensor 1 will be specifically described below. The axis x is a rotation axis of the angle sensor 1. The radial direction is a direction orthogonal to the axis x. In FIG. 1, the rotor 2 and the base 3 are illustrated in a predetermined positional relationship. The predetermined positional relationship is an example of the positional relationship between the rotor 2 and the base 3 in a use state with the angle sensor 1 attached to an application target. In the angle sensor 1 in the use state, the rotor 2 and the base 3 are opposed to each other in the direction of the axis x.

As illustrated in FIGS. 1 to 3, the rotor 2 is a disk-shaped member, and as described above, includes the plurality of protrusions 11, the protrusions 11 being parts extending in the radial direction. The rotor 2 has a ring 12, as illustrated in FIGS. 1 to 3, for example. The ring 12 is a part extending annularly around the axis x. The plurality of protrusions 11 are connected to an outer peripheral part 12a of the ring 12. The ring 12 has an inner peripheral surface 12b. The inner peripheral surface 12b is a surface facing away from the outer peripheral part 12a, and is a tubular surface extending in the direction of the axis x. The inner peripheral surface 12b forms a through hole extending in the direction of the axis x in the ring 12. As illustrated in FIGS. 1 to 3, an opening 13 is provided between two adjacent protrusions 11 of the plurality of protrusions 11. The opening 13 forms a space penetrating the rotor 2 in the direction of the axis x between two adjacent protrusions 11. The plurality of protrusions 11 are arranged, for example, at equal angular intervals or substantially equal angular intervals in a circumferential direction, the circumferential direction being a direction around the axis x. The plurality of protrusions 11 have a fan shape or a substantially fan shape, for example, as illustrated in FIG. 3.

The protrusion 11 has a conductor at least in a part. The conductor may be a member having a conducting wire-like element, and is, for example, a metal body 10 formed of metal. A member having a conductive element is a member with a so-called eddy current or induced current (current) being able to be generated in one surface. The protrusion 11 is entirely formed of metal, for example. That is, the entire protrusion 11 is the metal body 10. The ring 12 is formed of the same metal as the plurality of protrusions 11, for example, and the rotor 2 is the metal body 10 formed integrally, for example. The plurality of protrusions 11 and the ring 12 may be formed as separate bodies, and the plurality of protrusions 11 and the ring 12 may be connected to form the rotor 2. In this case, the ring 12 may be formed of a material different from that of the protrusion 11. For example, the ring 12 may be formed of a resin material.

As illustrated in FIGS. 1, 2, and 4, the base 3 is a plate-shaped member and has a part opposed to the plurality of protrusions 11 of the rotor 2 in the direction of the axis x. The base 3 is an insulating member and is a member made of resin, for example. The base 3 is made of, for example, a resin material, a non-magnetic body, a non-conductive material, or the like. The non-magnetic body may be non-conductive.

The base 3 has an outer peripheral surface and an inner peripheral surface as side surfaces, a front surface, and a back surface. A predetermined structure (for example, a plurality of protruding parts 21, an annular protruding part 22, and the like described below) is formed at the front surface of the base 3. The front surface of the base 3 is the above-described structural surface 3a. The structural surface 3a is a surface facing the rotor 2 side in the direction of the axis x. The structural surface 3a is provided with a plurality of protruding parts 21 extending from the base 3 toward the rotor 2. The plurality of protruding parts 21 are provided on parts of the structural surface 3a opposed to the plurality of protrusions 11 or the plurality of openings 13 of the rotor 2 in the direction of the axis x, and the plurality of protruding parts 21 are configured to be opposed to the plurality of protrusions 11 or the plurality of openings 13 of the rotor 21 in the direction of the axis x. For example, the plurality of protruding parts 21 extend along the axis x, and the radial positions of the protruding parts 21 overlap the radial positions of the protrusions 11.

For example, as illustrated in FIGS. 1 and 4, the plurality of protruding parts 21 are formed around the axis x, and are arranged at predetermined intervals (equal angular intervals or substantially equal angular intervals in the illustrated example) in the circumferential direction. As illustrated in FIGS. 1, 2, and 4, the base 3 has, on the structural surface 3a, an annular protruding part 22 at a radially outer side of the plurality of protruding parts 21. The protruding part 22 is an annular tubular part protruding from the structure surface 3a. An excitation circuit 5 described below is formed at the protruding part 22. As illustrated in FIGS. 1 and 4, the base 3 has an opening 23 at a radially inner side of the plurality of protruding parts 21. The opening 23 forms a hole penetrating the base 3.

As illustrated in FIGS. 1, 2, and 4, the base 3 includes, for example, a substrate 24. The substrate 24 is, for example, a printed circuit board (PCB). The substrate 24 includes electronic components 24a, wirings 24b, terminals 24c, and the like. The electronic components 24a and terminals 24c are arranged at the substrate 24, and the wirings 24b electrically connecting the conducting wire 4, the electronic components 24a, and the terminals 24c are formed at the substrate 24. The terminals 24c are parts for electrically connecting the conducting wire 4 and the substrate 24 to an external device.

As described above, the conducting wire 4 forms, on the structural surface 3a of the base 3, a planar shape having a plurality of undulations in the radial direction. The conducting wire 4 is, for example, a magnet wire. For example, as illustrated in FIG. 4, the conducting wire 4 is wound around each of the protruding parts 21, thereby forming a planar shape having a plurality of undulations in the radial direction. For example, the conducting wire 4 forms, along the plurality of protruding parts 21, a plurality of annular coils 31 around the axis x, thereby forming a coil structure 30 on the base 3. The coil structure 30 has a tubular planar shape formed by the plurality of coils 31 arranged in the circumferential direction around the axis x and connected. The conducting wire is covered with, for example, an insulating material (insulating film or covering film), and is electrically insulated.

Specifically, for example, toward one side in the circumferential direction, the conducting wire 4 is wound around the protruding parts 21 alternately from one side in the radial direction and the other side in the radial direction for each pair of two adjacent protruding parts 21, and after going around the plurality of protruding parts 21 once, the conducting wire 4 is turned back and is then similarly wound around the protruding parts 21 once toward the other side in the circumferential direction, so that the coil structure 30 is formed. In this case, each coil 31 is formed around two protruding parts 21.

The angle sensor 1 includes two coil structures 30 (30a, 30b), as illustrated in FIG. 4, for example. The coil structure 30a has a coil 31a, the coil 31a being the coil 31 described above, and the coil structure 30b has a coil 31b, the coil 31b being the coil 31 described above. The coil structure 30a and the coil structure 30b form the same planar shape or substantially the same planar shape. On the base 3, the coil structure 30a and the coil structure 30b overlap in the direction of the axis x. Between the coil structure 30a and the coil structure 30b, a part of a space surrounded by the coil 31a and a part of a space surrounded by the coil 31b are offset in the circumferential direction, and the other part of the space surrounded by the coil 31a and the other part of the space surrounded by the coil 31b overlap in the circumferential direction. Specifically, the space surrounded by the coil 31a is positioned offset from the space surrounded by the coil 31b in the circumferential direction by a width corresponding to half of the space surrounded by the coil 31a. The number of coils 31 in the coil structures 30 corresponds to a shaft multiplication angle set for the angle sensor 1. The number of the coil structures 30 corresponds to the number of detection signals output from the angle sensor 1.

In the example described above, each of the coil 31a and 31b is formed around two protruding parts 21. The coil structure 30a and the coil structure 30b are offset by one protruding part 21 in the circumferential direction. However, each of the coils 31a and 31b is not limited to being formed around two protruding parts 21, and may be formed around a different number of protruding parts 21. Although the case where the conducting wire 4 is wound one turn has been described, the winding configuration of the conducting wire 4 is not limited thereto, and the conducting wire 4 may be wound two or more turns. In other words, the coil formed by winding the conducting wire 4 may include, for example, not only a single layer but also a plurality of layers, such as two layers, three layers, four layers, or five layers, in the radial direction or the direction of the axis x. In this case, an output signal or a detected signal (for example, an amplitude of a signal waveform) can be amplified as compared with a case of one turn or one layer.

As illustrated in FIGS. 1, 2, and 4, the excitation circuit 5 is attached to the protruding part 22 of the base 3. The excitation circuit 5 is formed by winding a conducting wire around the protruding part 22. The conducting wire is made of a conductive member. The excitation circuit 5 is a magnetic circuit for generating a periodically changing magnetic flux acting on each of the plurality of coils 31, and the conducting wire forming the excitation circuit 5 is electrically connected to the substrate 24 or the electronic components 24a. The conducting wire is covered with, for example, an insulating material (insulating film or covering film), and is electrically insulated. Since the conducting wire is electrically insulated, the conducting wires can be wound in contact with each other, and an area of a winding part can be reduced.

The rotor 2 and the base 3 form an inductive angle sensor, and the plurality of coils 30 form a detection coil. A magnetic space or a magnetic gap is formed between the rotor 2 and the base 3. In the angle sensor 1, a magnetic flux directed in the direction of the axis x and periodically changing in magnitude acts on the plurality of coils 31 from the excitation circuit 5. On the other hand, as described above, the plurality of protrusions 11 (metal bodies 10) are arranged in the circumferential direction around the axis x, and as the rotor 2 rotates, the protrusions cross the magnetic flux generated by the excitation circuit 5. A projection of the protrusion 11 (metal body 10) having a part extending in the radial direction onto the coil 31 in the direction of the axis x moves as the rotor 2 rotates. Therefore, the magnetic flux from the excitation circuit 5 acting on each of the plurality of coils 31, the coils being a plurality of undulations in the radial direction of a planar shape formed by the conducting wire 4, is affected by eddy currents generated in the protrusions 11 (metal bodies 10) and is canceled, and thus periodically changes with rotation of the rotor 2. As a result, an electromotive force changing with the rotation of the rotor 2 is generated in the plurality of coils 31 by an electromagnetic induction action, and a signal changing with the rotation of the rotor 2 is detected from the conducting wire 4. Based on the detection signal from the conducting wire 4, a rotation angle of the rotor 2 is detected in an electric circuit device.

Next, modified examples of the metal body 10 will be described. In the above-described example, the entire protrusion 11 forms the metal body 10. However, as described above, the protrusion 11 may have a conductor in at least a part, and the part of the protrusion 11 may be the metal body 10. For example, the rotor 2 includes a plurality of metal bodies 10, and the plurality of metal bodies 10 are attached to respective parts of the plurality of protrusions 11 opposed to the base 3 in the direction of the axis x. Specifically, for example, the plurality of metal bodies 10 are located at respective parts (hereinafter referred to as opposing parts) 11a of the plurality of protrusions 11. As illustrated in FIGS. 2 and 3, the opposing parts 11a of the plurality of protrusions 11 have a surface facing the base 3 side in the direction of the axis x. This surface of the opposing part 11a is, for example, a planar surface or a substantially planar surface. Specifically, the plurality of metal bodies 10 are embedded in the plurality of respective protrusions 11 or exposed from the protrusions 11 while forming parts of surfaces of the plurality of protrusions 11 opposed to the base 3. The plurality of metal bodies 10 may be provided at the respective surfaces of the plurality of protrusions 11 opposed to the base 3. The plurality of protrusions 11 and the ring 12 are insulating members. The plurality of protrusions 11 and the ring 12 are made of, for example, a resin material, a non-magnetic body, a non-conductive material, or the like. The non-magnetic body may be non-conductive.

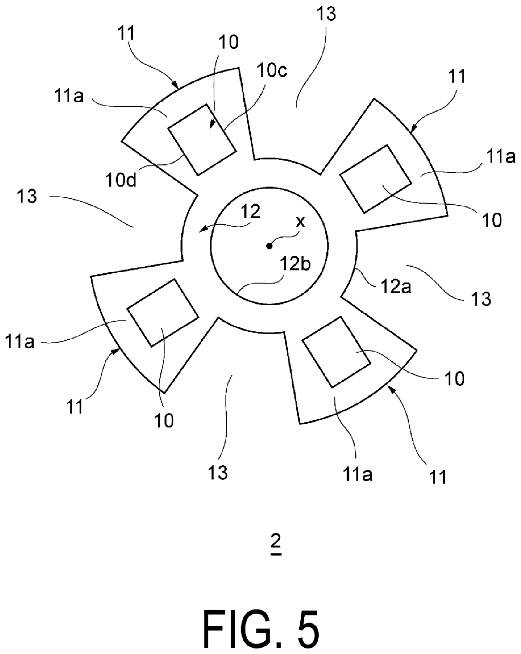

FIG. 5 is a front view of the rotor 2 illustrating one modified example of the metal body 10. As illustrated in FIG. 5, the plurality of metal bodies 10 are plate-shaped, and have a rectangular or substantially rectangular shape in a front view. The plurality of metal bodies 10 are fixed to the respective opposing parts 11a of the protrusions 11. The radial positions of the plurality of metal bodies 10 are positions overlapping the radial positions of the plurality of protruding parts 21 of the base 3.

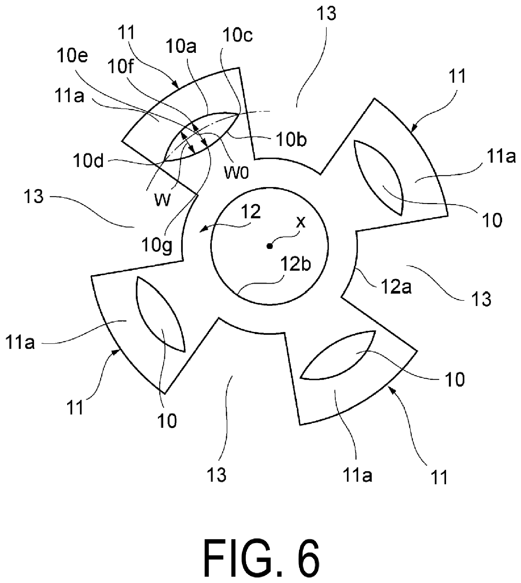

FIG. 6 is a front view of the rotor 2 illustrating one modified example of the metal body 10. As illustrated in FIG. 6, the plurality of metal bodies 10 are plate-shaped. The plurality of metal bodies 10 are fixed to the respective opposing parts 11a of the protrusions 11. The radial positions of the plurality of metal bodies 10 are positions overlapping the radial positions of the plurality of protruding parts 21 of the base 3. The metal body 10 has an outer peripheral side surface (hereinafter referred to as an end surface) 10a facing radially outward and an inner peripheral side surface (hereinafter referred to as an end surface) 10b facing radially inward. As illustrated in FIG. 6, the end surface 10a is curved so as to protrude radially outward, and as illustrated in FIG. 6, the end surface 10b is curved so as to protrude radially inward. Both ends of the end surface 10a in the circumferential direction and both ends of the end surface 10b in the circumferential direction are connected at acute angles at an end part 10c and an end part 10d, respectively.

As illustrated in FIG. 6, for example, in the circumferential direction of the metal body 10, regarding a width (width W) of the metal body 10 in a direction orthogonal to a circle having a predetermined radius centered on the axis x, a width of the end part 10c is smaller than a width of an intermediate part 10e located between the end part 10c and the end part 10d, and a width of the end part 10d is also smaller than the width of the intermediate part 10e. For example, regarding a width W of the metal body 10, a width between both end parts 10f and 10g of the metal body 10 in the radial direction (a width (width WO) of the intermediate part 10e) is maximum, the width W decreases toward the end part 10c in the circumferential direction, similarly, the width W decreases toward the end part 10d in the circumferential direction, and the end surface 10a and the end surface 10b extend along respective curved surfaces (for example, sine waves) protruding in opposite directions to each other. In other words, the end surface 10a and the end surface 10b extend in directions inclined toward the end part 10c and the part end 10d, respectively, and intersecting each other.

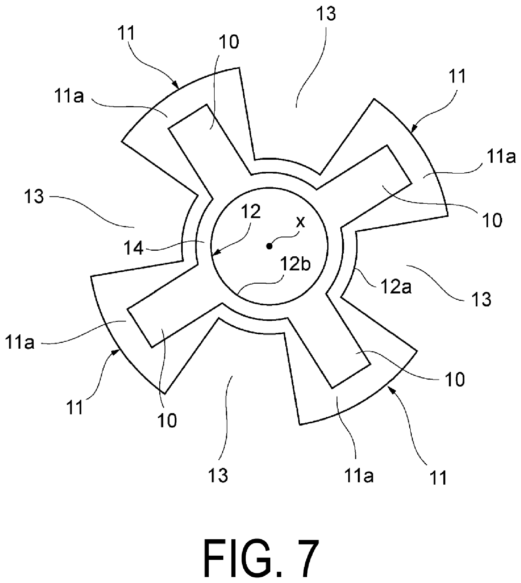

FIG. 7 is a front view of the rotor 2 illustrating one example of the metal body 10. The plurality of metal bodies 10 fixed to the respective opposing surfaces 11a of the plurality of protrusions 11 illustrated in FIGS. 5 and 6 may be electrically connected to each other via a member having conductivity. Specifically, for example, as illustrated in FIG. 7, the rotor 2 includes a connection body 14, the connection body 14 being an annular member having conductivity and fixed to the ring 12, and the plurality of metal bodies 10 are connected to the connection body 14 at a radially inner side. The connection body 14 is formed of, for example, the same metal as the metal body 10, and the plurality of metal bodies 10 and the connection body 14 are integrated. The connection body 14 need not be formed of the same metal as the metal body 10, and may be formed of a material having conductivity different from that of the metal body 10, and the plurality of metal bodies 10 and the connection body 14 may be formed as separate bodies and connected to each other. The connection body 14 need not be a continuous annular member, and may extend intermittently in an annular shape to connect two adjacent metal bodies 10. The connection body 14 may be provided on the plurality of protrusions 11.

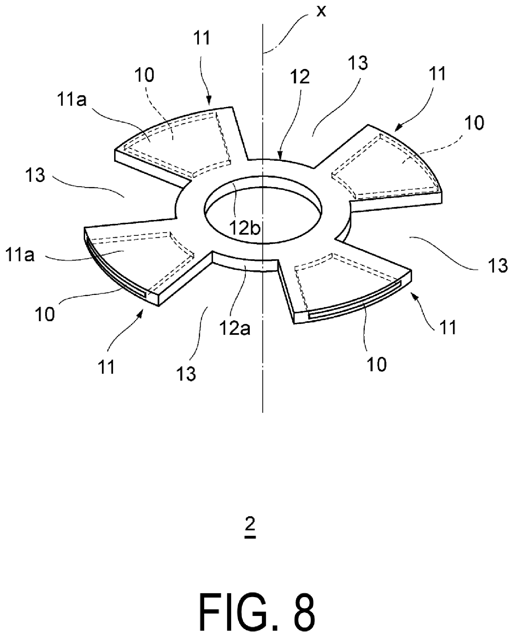

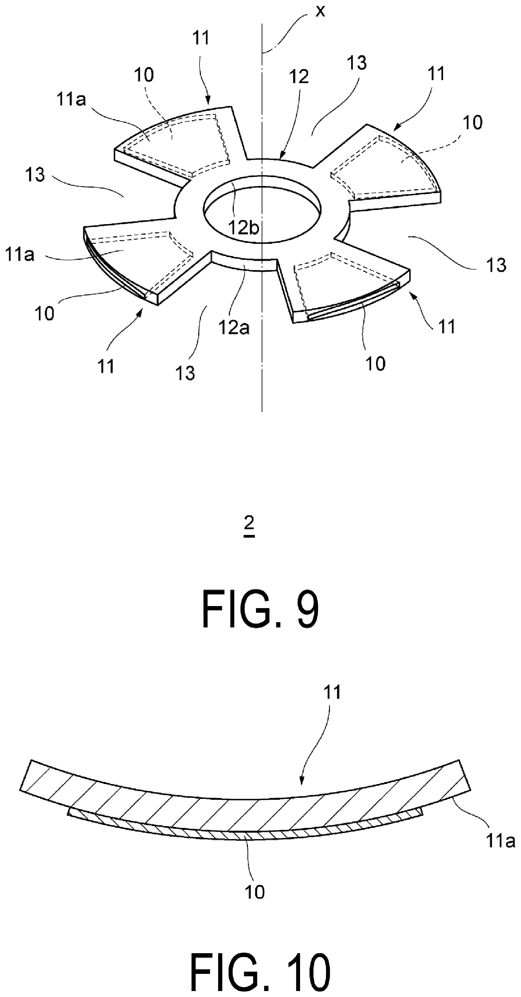

FIGS. 8 and 9 are perspective views of the rotor 2 illustrating another example of the metal body 10. As illustrated in FIGS. 8 and 9, the plurality of metal bodies 10 may be embedded in the plurality of respective protrusions 11. As illustrated in FIGS. 8 and 9, a part of the metal body 10 may be exposed from the surface of the protrusion 11, or the entire metal body 10 may be embedded in the protrusion 11. The metal body 10 may extend in a flat manner as illustrated in FIG. 8, or may extend in a curved manner as illustrated in FIG. 9. For example, as illustrated in FIG. 9, the metal body 10 is curved so as to protrude toward the base 3.

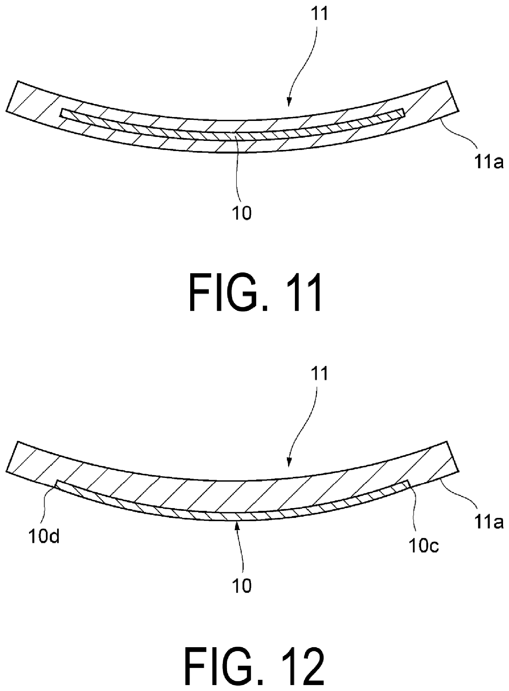

Next, modified examples of the protrusion 11 will be described. In the example described above, the opposing part 11a of the protrusion 11 has a planar surface or a substantially planar surface, but the opposing part 11a may have a surface curved so as to protrude toward the base 3 side, as illustrated in FIGS. 10 and 11. FIGS. 10 and 11 illustrate cross sections taken along a plane orthogonal to the radial direction of the protrusion 11. FIG. 10 illustrates a metal body 10 corresponding to the metal body 10 of FIGS. 5 to 7, and FIG. 11 illustrates a metal body 10 corresponding to the metal body 10 of FIG. 9. In the protrusion 11 according to the present modified example, as illustrated in FIGS. 10 and 11, the metal body 10 is curved along the opposing part 11a. A curvature of the curved metal body 10 in the cross section orthogonal to the radial direction may be the same as or different from a curvature of the opposing part 11a of the curved protrusion 11 in the cross section orthogonal to the radial direction. When the curvature of the curved metal body 10 in the cross section orthogonal to the radial direction is different from the curvature of the opposing part 11a of the curved protrusion 11 in the cross section orthogonal to the radial direction, the end parts 10c and 10d of the curved metal body 10 may be embedded in the opposing part 11a of the curved protrusion 11, as illustrated in FIG. 12. With this structure, the metal body 10 can be prevented from falling off from the rotor 2. Since the end parts 10c and the 10f of the curved metal body 10 are embedded in the opposing part 11a of the curved protrusion 11, that is, a part of the curved metal body 10 is exposed, adjustment of an airgap with the coil structure can be performed with higher accuracy. This can improve detection accuracy of the angle sensor 1.

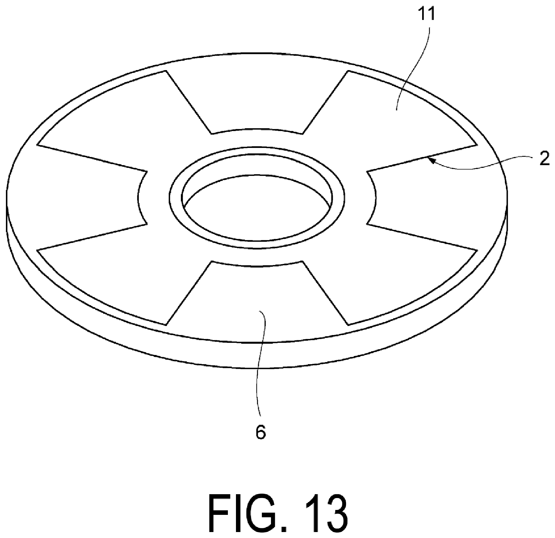

FIG. 13 is a perspective view illustrating another modified example of the rotor 2. The rotor 2 may be entirely or partially covered with an insulating member 6. The insulating member 6 is a member made of resin, for example. The insulating member 6 is made of, for example, a resin material, a non-magnetic body, a non-conductive material, or the like. The non-magnetic body may be non-conductive. As illustrated in FIG. 13, for example, the insulating member 6 has an outer shape covering the entire rotor 2 in the radial direction, and for example, has a disk-shaped outer shape. As illustrated, for example, in FIG. 13, the insulating member 6 covers the rotor 2 such that the surfaces of the plurality of protrusions 11 opposed to the base 3 are exposed to a surface of the insulating member 6. The insulating member 6 may have another shape.

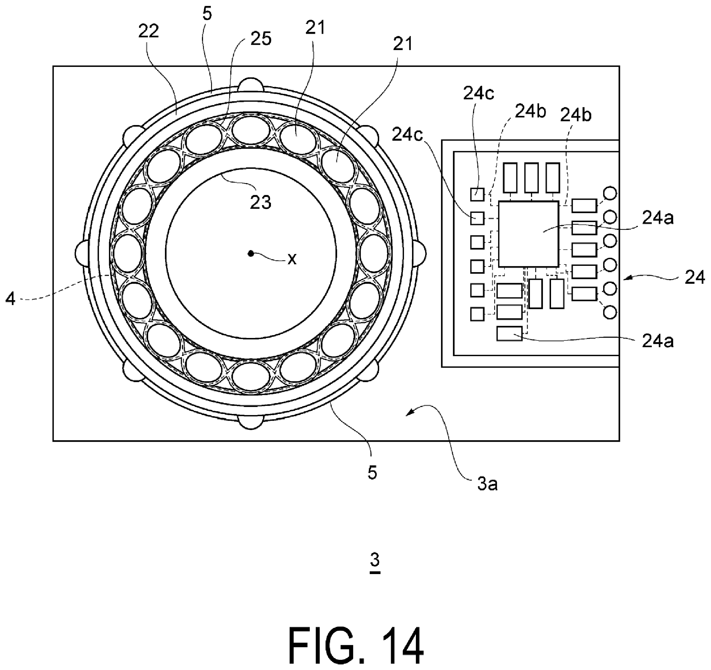

Next, modified examples of the base 3 will be described. In the above-described example, the conducting wire 4 is wound around the surfaces of the plurality of protruding parts 21 and exposed to the outside of the base 3. However, the conducting wire 4 wound around the plurality of protruding parts 21 may be surrounded or covered by an insulating member 25. For example, as illustrated in FIG. 14, the insulating member 25 is a cover covering the conducting wire 4 wound around the plurality of protruding parts 21. In this case, the plurality of protrusions 11 are opposed to the conducting wire 4 in the radial direction with the insulating member 25 interposed therebetween.

The angle sensor 1 has the above-described configuration, and the shape and the number of arrangements of the protruding parts 21 can be freely designed, and thus the shape of the coil structure 30 can be adjusted. Such adjustment can improve the accuracy of the angle sensor. The conducting wire 4 provided on the structural surface 3a of the base 3 forms a planar shape having a plurality of undulations in the radial direction, and forms the coil structures 30 formed by the plurality of connected coils 31. In this manner, the angle sensor 1 can form various coil structures 30 depending on the winding method of the conducting wire 4, and can increase the degree of freedom of the arrangement of the plurality of coils 31. Therefore, the angle sensor 1 can form the desired coil structure 30 in accordance with various forms, and can make an output waveform obtained from the detection signal detected from the conducting wire 4 close to a sine wave, thereby improving the detection accuracy.

The base 3 of the angle sensor 1 is formed of a material different from that of the substrate 24, and the number of printed circuit boards used in the angle sensor 1 can be reduced.

By embedding the metal body 10 and the conducting wire 4 in a member such as a resin member, durability of the metal body 10 and the conducting wire 4 against oil, heat, and sand and dust can be improved.

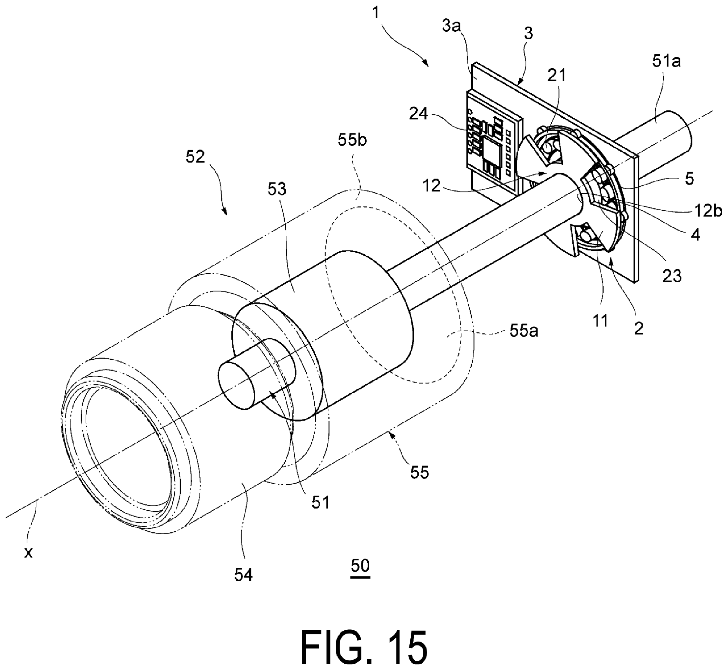

Next, an application target of the angle sensor 1 will be described. FIG. 15 is an exploded perspective view of one specific example of a rotary device as an application target of the angle sensor 1. FIG. 15 illustrates, in an exploded view, a rotary device 50 as one specific example of the rotary device. In FIG. 15, some configurations of the rotary device 50 are illustrated to be transparent.

As illustrated in FIG. 15, a rotary body 52 as the rotary device 50 includes the angle sensor 1, a rotating shaft 51, and a rotor 53. The rotating shaft 51 is fixed to the rotor 2 of the angle sensor 1, and the rotor 53 is fixed to the rotating shaft 51. In the rotary device 50, the axes of the rotating shaft 51 and the rotary body 52 coincide with or substantially coincide with the axis x of the angle sensor 1. Therefore, in the following description, the axis of the rotary device 50 (rotary body 52) is referred to as the axis x, and the axes of the angle sensor 1 and the rotating shaft 51 are referred to as the axis x.

The rotary body 52 is, for example, a motor, and includes the rotor 53 and a stator 54, and the rotating shaft 51 is fixed to the rotor 53. The motor 52 includes a frame 55. The frame 55 accommodates the rotor 53 and the stator 54. The frame 55 has an opening part 55a.

A space inside the frame 55 is open to the outside of the frame 55 through the opening part 55a of the frame 55. The rotor 53 and the stator 54 are accommodated in the space inside the frame 55. The rotating shaft 51 protrudes out of the opening part 55a of the frame 55. As illustrated in FIG. 15, the frame 55 is, for example, a tubular member. The frame 55 has an annular end part 55b surrounding the opening part 55a. The end part 55b faces the direction of the axis x.

The rotor 2 of the angle sensor 1 is fixed to the rotating shaft 51, and one end part (hereinafter, referred to as a distal end part) 51a of the rotating shaft 51 passes through the rotor 2 and the opening 23 of the base 3. The distal end part 51a of the rotating shaft 51 is rotatably supported by, for example, a bearing (not illustrated). The base 3 of the angle sensor 1 is supported by, for example, a support member (not illustrated). In the rotary device 50, the rotor 2 is positioned at a predetermined position with respect to the base 3 as described above, and the opposing surfaces 11a of the plurality of protrusions 11 of the rotor 2 are opposed to, with a gap in the direction of the axis x, the protruding parts 21 of the base 3, and the plurality of coils 31 formed by the planar shape of the conducting wire 4 (see FIGS. 1 and 4). The angle sensor 1 may be supported by the rotary device 50 such that the base 3 is located at the rotary body 52 side with respect to the rotor 2. The rotary device 50 may have a cup-shaped protective cover (not illustrated), and the angle sensor 1 may be covered with the protective cover. With the covering by the protective cover, waterproof performance and dustproof performance can be added.

The rotary device 50 has the above-described configuration, and when the rotary body 52 is driven and the rotating shaft 51 rotates, the rotor 2 of the angle sensor 1 fixed to the rotating shaft 51 rotates about the axis x together with the rotating shaft 51. Thus, the metal bodies 10 of the rotor 2 rotate while facing the coils 31 (31a and 31b) formed by the conducting wire 4 of the base 3 of the angle sensor 1, and the magnetic flux from the excitation circuit 5 acting on each of the plurality of coils 31 changes periodically. As a result, signals changing with the rotation of the rotor 2 are detected from the conducting wire 4 forming the plurality of coils 31. Based on the detection signals from the conducting wire 4, a rotation angle of the rotor 2 is detected in an electric circuit device as an external device connected to the angle sensor 1.

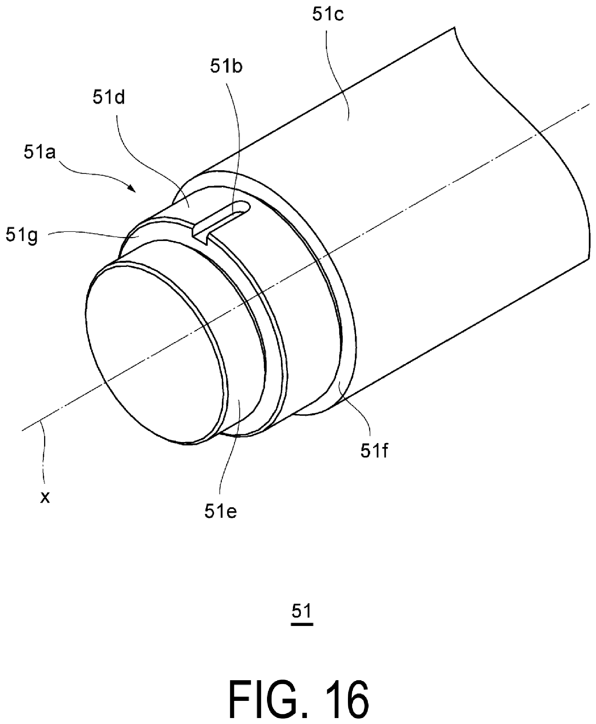

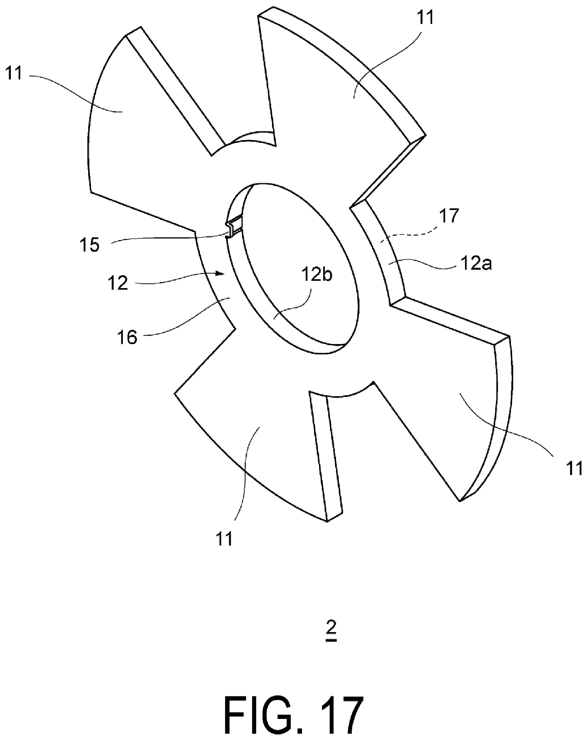

Next, a fixing configuration between the rotating shaft 51 and the rotor 2 of the angle sensor 1 in the rotary device 50 will be described. FIG. 16 is a perspective view illustrating the distal end part 51a of the rotating shaft 51 and the vicinity of the distal end part 51a, and FIG. 17 is a perspective view of one specific example of the rotor 2 of the angle sensor 1. As illustrated in FIG. 16, a recessed part 51b is formed at an outer circumferential surface of the distal end part 51a of the rotating shaft 51. As illustrated in FIG. 17, in the rotor 2, a protrusion part 15 is formed to be accommodated in the recessed part 51b of the rotating shaft 51.

Specifically, for example, as illustrated in FIG. 16, a step is formed at the distal end part 51a of the rotating shaft 51, and the rotating shaft 51 has a first outer peripheral surface 51c, a second outer peripheral surface 51d, and a third outer peripheral surface 51e. The first outer peripheral surface 51c is a main outer peripheral surface of the rotating shaft 51 and is a tubular surface extending along the axis x from the distal end part 51a to the other end of the rotating shaft 51. The second outer peripheral surface 51d and the third outer peripheral surface 51e are formed at the distal end part 51a. The second outer peripheral surface 51d is a tubular surface extending along the axis x and is adjacent to the first outer peripheral surface 51c. The third outer peripheral surface 51e is a tubular surface extending along the axis x and is adjacent to the second outer peripheral surface 51d on an opposite side to the first outer peripheral surface 51c.

As illustrated in FIG. 16, the second outer peripheral surface 51d has a width in the radial direction smaller than a width of the first outer peripheral surface 51c in the radial direction. A stepped surface 51f as an annular surface is formed between the first outer peripheral surface 51c and the second outer peripheral surface 51d. The third outer peripheral surface 51e has a width in the radial direction smaller than the width of the second outer peripheral surface 51d in the radial direction. A stepped surface 51g as an annular surface is formed between the second outer peripheral surface 51d and the third outer peripheral surface 51e. The stepped surfaces 51f and 51g face the direction of the axis x.

As illustrated in FIG. 16, the recessed part 51b is formed at the second outer peripheral surface 51d, and the recessed part 51b as a groove recessed toward the inner side of the rotating shaft 51 is formed at the second outer peripheral surface 51d. The recessed part 51b extends along the axis x. The recessed part 51b extends to the stepped surface 51g and is open at the stepped surface 51g. The recessed part 51b does not extend to the stepped surface 51f, that is, the recessed part 51b extends to a midway point between the stepped surface 51g and the stepped surface 51f. The inner peripheral surface 12b of the rotor 2 is fixed to the second outer peripheral surface 51d. For example, a part of the rotating shaft 51 at the second outer peripheral surface 51d is press-fitted into a space surrounded by the inner peripheral surface 12b of the rotor 2, and the inner peripheral surface 12b of the rotor 2 is fixed to the second outer peripheral surface 51d. The configuration for fixing the rotor 2 to the outer peripheral surface 51d of the rotating shaft 51 is not limited to the above-described configuration using fixing by press-fitting. For example, a part of the rotating shaft 51 at the second outer peripheral surface 51d may be provided in the space surrounded by the inner peripheral surface 12b of the rotor 2, the inner peripheral surface 12b of the rotor 2 and the second outer peripheral surface 51d may be bonded using adhesive or the like, and thus the inner peripheral surface 12b of the rotor 2 may be fixed to the second outer peripheral surface 51d. Alternatively, another member such as a metal ring (not illustrated) may be press-fitted to clamp and fix the rotor 2 between the stepped surface 51f of the rotating shaft 51 and the ring. When the ring is made of metal, the ring may be made of the same material as the rotating shaft 51. In this case, since the linear expansion coefficient is the same as that of the rotating shaft 51, release of fixing due to deformation caused by heat can be prevented. The material of the ring may be different from that of the rotating shaft 51.

As described above, the recessed part 51b does not extend to the stepped surface 51f and therefore, machining time can be shortened. Since the machining region can be made small, a reduction in strength of the rotating shaft 51 can be prevented.

As illustrated in FIG. 16, in the circumferential direction, the parts of the first outer peripheral surface 51c and the third outer peripheral surface 51e at the position of the recessed part 51b are curved surfaces. The second outer peripheral surface 51d is, for example, a cylindrical or substantially cylindrical surface extending along the axis x, and the third outer peripheral surface 51e is, for example, a cylindrical or substantially cylindrical surface extending along the axis x.

As illustrated in FIG. 17, the protrusion part 15 is formed at the inner peripheral surface 12b of the rotor 2. The protrusion part 15 is a part protruding from the inner peripheral surface 12b toward an inner peripheral side, extends in the direction of the axis x, and extends from an end surface 16 to a midway point between the end surface 16 and an end surface 17, for example, as illustrated in FIG. 17. The protrusion part 15 may extend to the end surface 17. The end surfaces 16 and 17 are surfaces facing the direction of the axis x of the ring 12, and the end surface 16 and the end surface 17 face away from each other.

As described above, when the rotor 2 is molded from a resin material, it is easy to form a structure with the protrusion part 15 extending from the end surface 16 to a midway point between the end surface 16 and the end surface 17, that is, to form the protrusion part 15 to be small in the direction of the axis x. This can reduce a length in the direction of the axis x of the recessed part 51b for accommodating the protrusion part 15. The entire rotor 2 need not be molded from a resin material. For example, the part of the ring 12 may be formed of resin and the other part need not be formed of resin, or the part of the ring 12 may be formed of a material other than resin and the other part may be formed of resin.

The distal end part 51a of the rotating shaft 51 is inserted into the rotor 2 such that the protrusion part 15 of the rotor 2 enters the recessed part 51b of the rotating shaft 51, and, as a result, the rotor 2 is positioned at a predetermined position in the circumferential direction with respect to the rotating shaft 51. Thus, in this specific example, the positioning of the rotor 2 in the circumferential direction with respect to the rotating shaft 51 is facilitated when the rotor 2 is fixed to the rotating shaft 51. When the rotor 2 is fixed to the rotating shaft 51, the end surface 17 of the rotor 2 is in contact with the stepped surface 51f of the rotating shaft 51. When the rotor 2 is fixed to the rotating shaft 51, the end surface 17 of the rotor 2 need not be in contact with the stepped surface 51f of the rotating shaft 51.

The rotary body of the rotary device according to the present invention naturally includes a rotating body such as a motor and also includes a rotating body other than a motor. For example, the rotary body of the rotary device according to the present invention includes a rotary body for power steering, an accelerator pedal, a brake pedal, seat reclining, electric parking, and the like for an automobile.

The shape of the base 3 is rectangular in the present embodiment but is not limited to a rectangle. The shape of the base 3 may be, for example, a circular shape or a shape with a rectangle connected to a circle when viewed from the front. In this case, since the shape of the base 3 can be freely changed in accordance with a region for the conducting wire 4 and a region for the substrate 24, the amount of material used can be reduced, and the angle sensor 1 can be reduced in weight.

Further, the base 3 may be provided with a through hole for attachment to a rotary device or the like.

Although the present invention has been described through the above embodiments, the technical scope of the present invention is not limited to the scope described in the above embodiments. Various modifications or improvements can be made to the above embodiments, and this is obvious to one skilled in the art. Such modifications or improvements are also included in the technical scope of the present invention, and this is obvious from the description of the claims.

The above-described embodiments are intended to facilitate understanding of the present invention and are not intended to be construed as limiting. The above-described embodiments do not limit the application target of the present invention, and the present invention may include any objects as the application target. The components included in the above-described embodiments, arrangement, materials, conditions, shapes, sizes, or the like, of the components are not limited to those exemplified and may be appropriately changed. For example, the present invention includes differences occurring in the implementation of manufacturing tolerances or the like. The components illustrated in the different embodiments can be replaced or combined partially to the extent not technically inconsistent. The components can be appropriately and selectively combined so as to achieve at least part of the objects and the effects described above.

### Reference Signs List

1 Angle sensor, 2 Rotor, 3 Base, 3a Structural surface, 4 Conducting wire, 5 Excitation circuit, 6 Insulating member, 10 Metal body, 10a, 10b End surface, 10c, 10d End part, 10e Intermediate part, 11 Protrusion, 11a Opposing surface, 12 Ring, 12a Outer peripheral surface, 12b Inner peripheral surface, 13 Opening, 14 Connection body, 15 Protrusion part, 16, 17 End surface, 21 Protruding part, 22 Protruding part, 23 Opening, 24 Substrate, 24a Electronic component, 24b Wiring, 24c Terminal, 25 Insulating member, 30, 30a, 30b Coil structure, 31, 31a, 31b Coil, 50 Rotary device, 51 Rotating shaft, 51a Distal end part, 51b Recessed part, 51c First outer peripheral surface, 51d Second outer peripheral surface, 51e Third outer peripheral surface, 51f, 51g Stepped surface, 52 Motor, 53 Rotor, 54 Stator, 55 Frame, 55a Opening part, W, WO Width, x Axis

## Claims

1. An angle sensor, comprising:
a rotor having a plurality of protrusions extending in a radial direction;
a base; and
a conducting wire with a covering, wherein
the conducting wire provided at a surface of the base forms a planar shape having a plurality of undulations in the radial direction, and
the protrusions are opposed to the conducting wire in a rotational axis direction.

2. The angle sensor according to claim 1, wherein
the surface of the base is provided with a plurality of protruding parts extending from the base toward the rotor, and
the conducting wire is wound around the plurality of protruding parts.

3. The angle sensor according to claim 1 or 2, wherein the protrusions are opposed to the protruding parts in the rotational axis direction.

4. The angle sensor according to any one of claims 1 to 3, wherein an opening is formed between two protrusions of the plurality of protrusions.

5. The angle sensor according to any one of claims 1 to 4, wherein the rotor includes a ring and the plurality of protrusions connected to an outer peripheral part of the ring.

6. The angle sensor according to any one of claims 1 to 5, comprising a substrate including: an electronic component; a wiring; and a terminal electrically connected to the conducting wire.

7. The angle sensor according to any one of claims 1 to 6, wherein
the rotor includes a plurality of metal bodies, and
the plurality of metal bodies are located inside the respective protrusions.

8. The angle sensor according to any one of claims 1 to 6, wherein
the rotor includes a plurality of metal bodies,
the protrusions have a surface opposed to the conducting wire, and
the plurality of metal bodies are located at the surface.

9. The angle sensor according to claim 7 or 8, wherein
the metal bodies have an end part, the other end part, and an intermediate part between the end part and the other end part, and
in a circumferential direction, a width of the end part of each of the metal bodies and a width of the other end part of each of the metal bodies are smaller than a width of the intermediate part of each of the metal bodies.

10. The angle sensor according to any one of claims 7 to 9, wherein the rotor includes a connection body configured to electrically connect the plurality of metal bodies to each other.

11. The angle sensor according to any one of claims 1 to 10, wherein
the conducting wire is covered with an insulating member, and
the protrusions are opposed to the conducting wire with the insulating member interposed between the protrusions and the conducting wire.

12. The angle sensor according to any one of claims 1 to 11, wherein the metal bodies are curved, each protruding toward a side of the base.

13. A rotary device, comprising:
the angle sensor according to any one of claims 1 to 12;
a rotating shaft fixed to the rotor of the angle sensor; and
a rotary body fixed to the rotating shaft.

14. The rotary device according to claim 13, wherein
a recessed part is formed at an outer peripheral surface of the rotating shaft, and
the rotor of the angle sensor is fixed to the outer peripheral surface of the rotating shaft.

15. The rotary device according to claim 14, wherein
the rotating shaft has a first outer peripheral surface, a second outer peripheral surface having a width smaller than a width of the first outer peripheral surface in the radial direction, and a third outer peripheral surface having a width smaller than the width of the second outer peripheral surface in the radial direction, and
the recessed part is formed at the second outer peripheral surface.

16. The rotary device according to claim 15, wherein in a circumferential direction, parts of the first outer peripheral surface and the third outer peripheral surface at a position of the recessed part are curved surfaces.

17. The rotary device according to claim 14, wherein a protrusion part to be accommodated in the recessed part of the rotating shaft is formed at the rotor of the angle sensor.
